# EUROPEAN PATENT SPECIFICATION

(11) **EP 4 655 510 B1**
(45) Date of publication and mention of the grant of the patent: **19.08.2026**
(21) Application number: 25722308.1
(22) Date of filing: 11.04.2025
(51) Int. Cl.: F15D 1/02, F04B 53/10, F16L 55/027

(54) **THE DIODIC PIPE**
DIODISCHES ROHR
TUYAU DIODIQUE

(30) Priority: 15.04.2024 IT 202400008398
(43) Date of publication of application: 03.12.2025
(73) Proprietor: Gallelli, Vincenzo, 88068 Soverato (CZ) (IT)
(72) Inventor: Gallelli, Vincenzo, 88068 Soverato (CZ) (IT)
(86) International application number: PCT/IT2025/050091
(87) International publication number: WO 2025/220051

(56) References cited:
- WO-A1-2016/174379
- WO-A1-2023/043791
- CN-A- 117 052 962
- US-A1- 2019 039 066

## Description

### Technical field

The present invention relates to the field of hydraulics, mechanic machinery, pressure pipe-line systems, combined heat and refrigeration systems as components employed for the production, transmission and transformation of hydraulic, mechanical and thermal energy.

### Background Art

In 1920 Nicholas Tesla invented the Tesla valve (TV), a valvular conduit, an apparatus that was claimed to act as a diode giving place to an asymmetric fluid flow. It has been defined as a non-return valve with no moving parts (NMP). However, the technology was considered of no significant use at the time and the possibility to act as a total non-return valve claimed by Tesla has never been demonstrated.

The conception of a one way check valve with no moving parts appears anyway to this day in US Patent 2019/039066 A1 Febuary 07th 2019 "Three-dimensonal Fluidic Check Valve device" by Gilbert & Le Roy Skilton and in Patent WO2 2023/043791 A1 March 23rd 2023 by Lemon Benjamin James " Wave powered one way fluid flow generator".

These Patents are limited to the design of a new one way check valve (ON/OFF) and not of a device as a pressure control valve with a variable pressure diodicity or a device with a thermal diodicity; they propose valvular conduits with an internal geometry whose shape, although different from each other, is bound mostly to the flexibility of the material by which the device is made according to the related description and some of their related claims exposed.

In the last years researchers have raised their attention on this forgotten technology focusing on the structure of the Tesla Valve, its' architecture and design, implementing it in thermal manipulation fluidics, micropumps and in applications toward sustainable technology manifested in fuel cell devices.

Researchers, in order to evaluate a TVs' adequacy or any device able to create an asymmetric flow have introduced a parameter called pressure "Diodicity" indicating the ratio of total pressure drop in the reverse direction to that in the forward direction for a given flow rate Q : Di= (Δpᵣ / Δp_{f})_{Q} . Higher the value, better the performance and flow control ability. A Thermal Diodicity Dit has been defined as the ratio of the average Nusselt's number (Nu) for the flow in the reverse direction to that of flow in the forward direction Diₜ= Nuᵣ/Nu_{f} . Nu is the ratio of thermal energy convected to the fluid to that conducted within the fluid. Thermal Diodicity shows us the effectiveness of heat transfer in the reverse direction to that in the forward direction.

Models for simulation as three-dimensional computational fluid dynamics along with topology optimization methods have been used to determine diodicity.

Devices based on these models called passive fluid diodes have been patented but are far from the geometry design and models proposed in this invention.

Devices with a high thermal conductance in one direction, and a very low thermal conductance in the opposite direction have been made and are called Diode Heat Pipes: based on capillary action, they have a structure completely different from that of the TV.

The advent of Computer aided design and Additive Manufacturing with 3d printers has given a great impulse in design and manufacturing, Therefore by means of these new design and manufacturing technologies I have applied the principles of the Tesla Valve in a new complex design and construction of a circular cross-section valvular conduit with an internal flow design geometry structure, of different shapes, resembling a normal pipe that can be easily joined to all components of a hydraulic circuit, a mechanic machinery, a pressure pipe-line system such as US2019039066A1 coining it with the term "Diodic pipe".

### Disclosure of Invention

The aim of the present invention is to make available to the state of the art a flexible device with no mechanical moving parts, connectable to any component of a hydraulic system and mechanic machinery, using any kind of fluid, making circuits and systems easier to control, much more reliable with a high life expectancy. The pipe can have any shape (sinuous, circular, helical) except for straightness, which makes it however versatile, able to be adaptable for any architectural solution.

In hydraulic circuits, oscillations, vibrations occur for many reasons with failure of some components and consequently of the whole system. Water and oil pumps, gas compressors, valves for pressure reduction and regulation are an example. Diodic pipes arranged as in a Graetz bridge circuit can transform oscillations into a one-way fluid flow motion. They reduce the work load of high pressure reducing valves improving the safety and costs of mechanisms.

In pipe-line systems, in pneumatic and hydraulic circuits combining diodic pipes with pressure relief valves can lower the demand for the performance on these valves.

Diodic pipes can reduce the water hammer effect, culprit in pump failure and placed on the outlet side of pumps can protect backflow impeding impeller failure.

In fully hydrogen driven engines it's necessary to have a high pressure storage in the tank to increase recharge mileage. Diodic pipes help achieve hydrogen decompression between the tank and the fuel cell stack in engines.

Diodic pipes can impede in HVAC systems the flushing back down of the coolant pumped up in large and high buildings.

Diodic pipes also have a thermal diodicity; this property allows them to be used as heat exchangers, regenerators due to a high specific heat surface area and to the presence of heat storage zones in the pipes. They can be used in pulsating heat pipes (PHP), heat device spreaders to prevent overheating, improving the circulation of the working fluid contributing to a better performance of these devices.

The aforesaid aims and advantages are achieved by this device, in question in the present invention, for the transmission, distribution, production of hydraulic, mechanical and thermal energy by means of all types of fluids which is characterized by the provisions of the claims set out below.

### Brief Description of Drawings

Further characteristics of the invention will be better highlighted in the following description of some embodiments thereof, illustrated, in the form of a non-limiting example, with the help of accompanying drawings.
- Figures 1A-1B-1C: the base sinuous (1A), curved (1B), helical (1C) modular element with the internal two fin flow geometry design in view and section;
- Figure 2A: the base sinuous (2A) modular element, with the internal four fin flow geometry design in view and section;
- Figures 2B-2C: the base curved (2B), helical (2C) modular element with the internal three fin flow geometry design in view and section;
- Figure 3A: the base sinuous modular element (3A) with the internal four fin flow geometry structure and the additional torsional effect in view and section;
- Figure 3B: the base curved modular element (3B) with the internal three fin flow geometry design and the additional torsional effect in view and section;
- Figures 4A-4B-4C: the Diodic pipe as the result of base modular elements of Fig.1A, Fig.1B, Fig.2A in series, in view and section;
- Figure 5: the Diodic pipe as the result of base modular elements of Fig. 2A and Fig.2B in series, in view and section;
- Figures 6A, 6B: View and section of the Diodic pipes as the result of base modular elements of Fig. 1C and Fig. 2C in series;
- Figure 7: View and section of the Diodic pipe built by the combination of base modular elements of Fig. 3A in series;
- Figure 8: View and section of the Diodic pipe built by the combination of base modular elements of Fig. 3B in series;
- Figure 9: Example in view and section of a Regenerator model consisting of Diodic pipes in sinuous configuration arranged in parallel;
- Figure 10: example in view of a single loop Pulsating Diodic Heat Pipe.

### Best Mode for Carrying Out the Invention

The architecture, structure and design of the diodic pipe in question is illustrated below with particular reference to the figures.

The principles and theory are those applied in the Tesla valve or better in a multi stage Tesla valve, in which the asymmetric flow is majorly due to the partition of the fluid into secondary streams that go through twists to slam into and confine the progression of the flow in the primary stream, that decreases when flow occurs in the reverse direction.

The design and the internal structure that is generated is however much more complex, but has may advantages one of which is its' great versatility that will be further on explained.

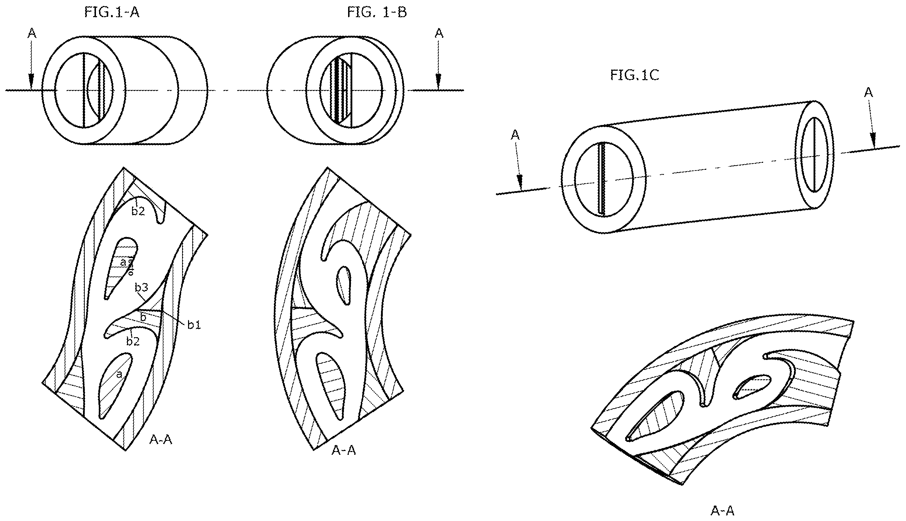

The Diodic Pipe is a pipe with a circular cross-section generated by a combined sequence of base modular elements inside of which is contained a flow geometry design. The base modular element generates the form and profile of the pipe and the internal flow geometry design determines its' pressure and thermal Diodicity . As illustrated in Fig.1 the base modular element can have a shape that can be sinuous (1A), curved (1B) or helical (1C); each base modular element containing an internal flow geometry design in which are dislocated fins (a) and socket structures (b) all contained within the limits of the circular cross-section of the pipe in comparison to Tesla's design. A complex design with a flow cross-section that doesn't remain constant. The fins (a) and socket structures (b) shown in Fig.1A protruding from the walls inwards create the channels in which the fluid's motion occurs. The final form that is generated by combining these base modular elements in series gives place to a shape that can be sinuous, curved, helical. Width is limited to the diameter of the pipe, while length is a parameter chosen bound to the pressure, thermal diodicity desired.

Concentrating our attention at the internal flow geometry design of the base modular element, the fins (a) and socket structures (b) have refined surfaces well curved showing no discontinuity; the structural sockets generated have one extruded ellipsoidal surface (b2) and one boundary convergent surface (b3) studied to smoothen the flow in the forward direction. The ellipsoidal surface creates a cavity in which the fluid slows down, inverts its' direction (180° turn) hindering the flow in the primary channel when the flow occurs in the reverse direction.

The internal flow geometry design of the base modular element aforesaid is of three different types:
- A two fin flow geometry design suited for a sinuous (1A), curved (1B) and helical (1C) base modular element;
- A three fin (2B-2C) flow geometry design suited for a curved (2B) and helical (2C) base modular element;
- A four fin (2A) flow geometry design suited for a sinuous base modular element (2A).

The choice of the internal flow geometry design depends on the dimensions of the pipe, the kind, density, viscosity of the fluid (liquid, gas...) we're dealing with; pipe diameter, flow rate, working pressure range are parameters necessary not only to choose the appropriate internal flow geometry design but to define the length of the pipe and consequently the pressure, thermal diodicity required.

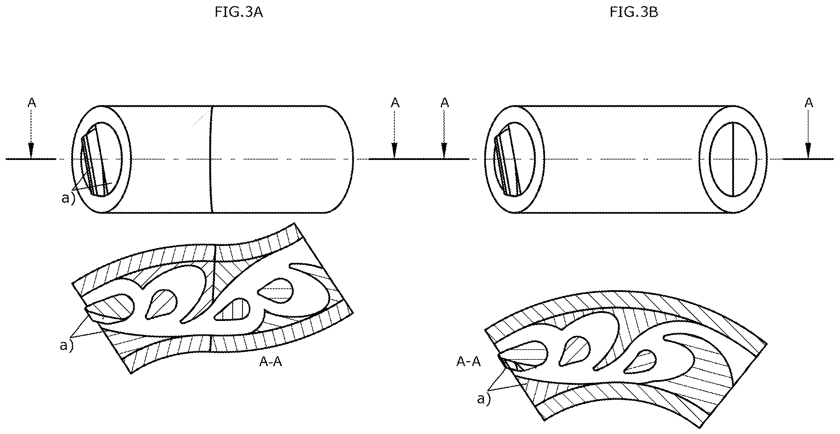

As shown in fig.3A in the base modular sinuous element with the internal four fin flow geometry design we rotate part of the fin and socket structure (a) around the center of the pipe's cross-section as well as in the base modular curved element with the internal three fin flow geometry design shown in fig.3B: this torsion produces a spiral fluid motion along the forward direction helping to increase diodicity. This can also be done on the socket structures and fins in the sinuous and curved base modular elements with the internal two fin flow geometry design.

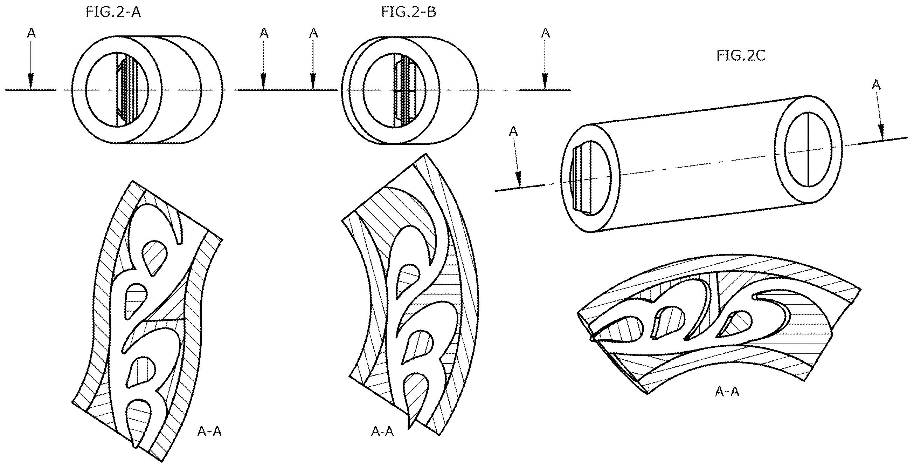

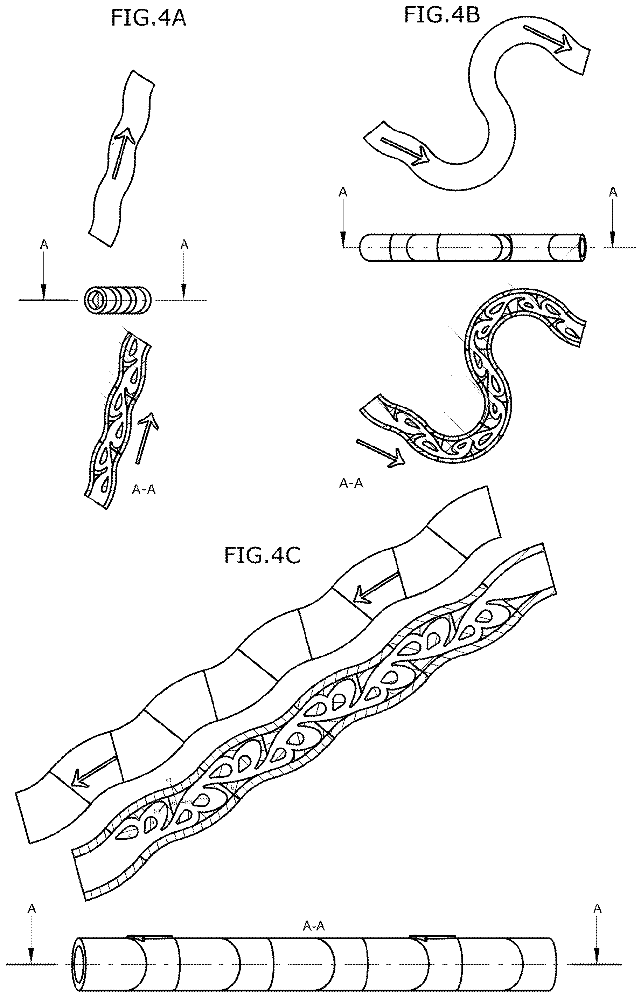

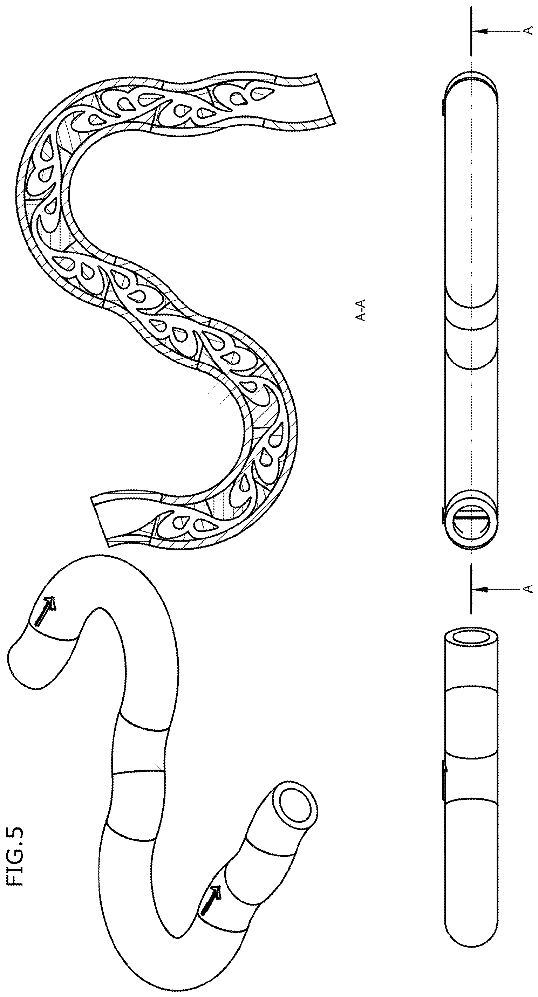

Some of the shapes of the pipe that results in combining in series the base modular elements in Fig.1A-1B-1C-2A-2B-2C-3A-3B are shown in Fig. 4A-4B-4C-5-6A-6B-7-8.

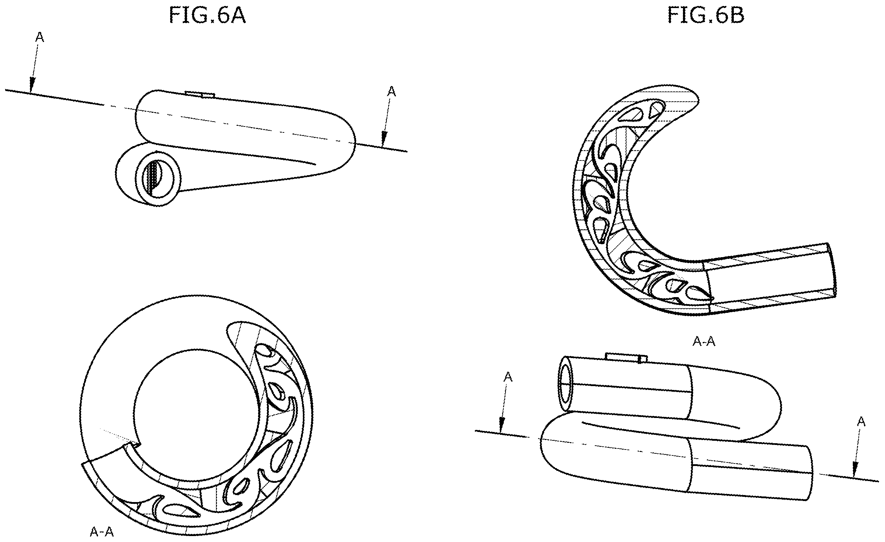

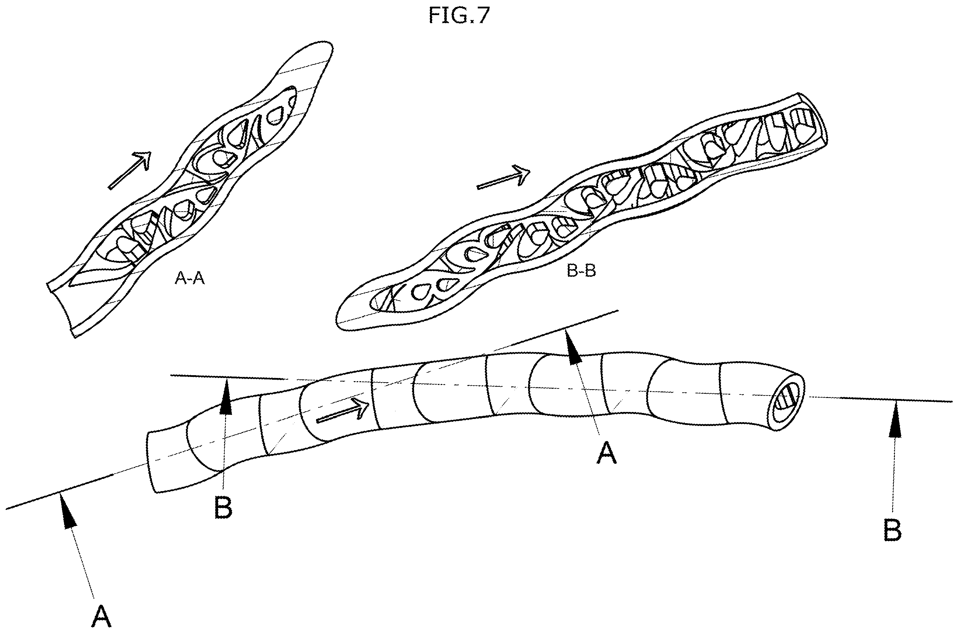

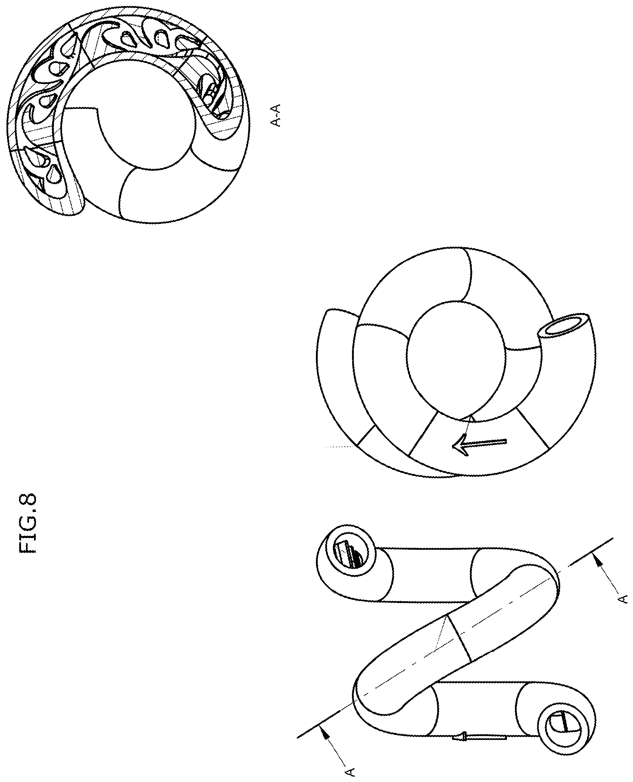

The final shape and profile of the diodic pipe can be totally sinuous (4A, 4C), curved or both curved and sinuous (Fig.4B-5). If we have space available in height we can obtain a helical configuration (Fig.6A-6B) based on the combined sequence of the helical base modular element with the internal two fin flow geometry design (1C) and three fin flow geometry design (2C). The combination in series of base modular element in Fig. 3A and fig. 3B generates the shapes in Fig.7 and Fig.8 with a curvature that varies due to the torsion effect.

As it can be seen from Fig.4A to Fig.8 shape options are many, variable. The design is very flexible, versatile and offers many solutions. We can obtain similar values of diodicity combining more and different parts of different topological structures with the shape and length desired (sinuous+curved, helical+sinuous+curved....).

These pipes therefore can be designed on the basis of the space available and can be easily joined to normal pipes or components of the circuit with the common joint methods nowadays in use.

Let's take a look at the thermal characteristics of the Diodic Pipe.

Arranging a number of Diodic Pipes like those for example illustrated in fig.4A, 4C in parallel is a solution to obtain a heat exchanger. Thermal energy is transmitted during flow by conduction, convention, irradiation and in the pipe part of this energy can be stored in the sockets. This advantage and the higher specific heat surface area show that Diodic pipes are also suited for heat transfer applications.

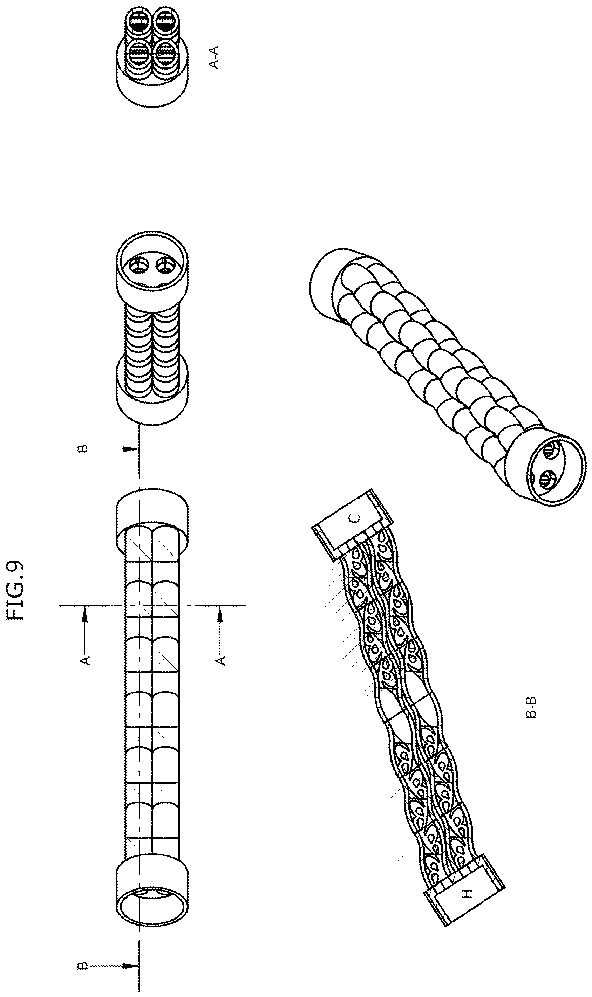

In Fig. 9 the combination in parallel of four sinuous diodic pipes of fig. 4C each divided in two parts that differ in orientation separated by an empty center zone, each part pointing their forward direction towards their starting point as if motion began from the center zone, is an example of a Regenerator in which asymmetric flow is neutralized: the fluid alternates it's motion from the cold zone to the hot zone and viceversa and an asymmetric flow is not needed. What is important is during the passage of the fluid from the cold zone to the hot zone, an isochoric (constant volume) heat addition occurs while from hot zone to cold zone an isochoric heat subtraction occurs.

Pulsating Heat Pipes (PHP) are effective passive heat spreaders used in cooling systems, to avoid overheating in electronic, electromechanics circuits but also applied in photovoltaic plants, desalination systems, solar thermal, high temperature and cryogenic applications.

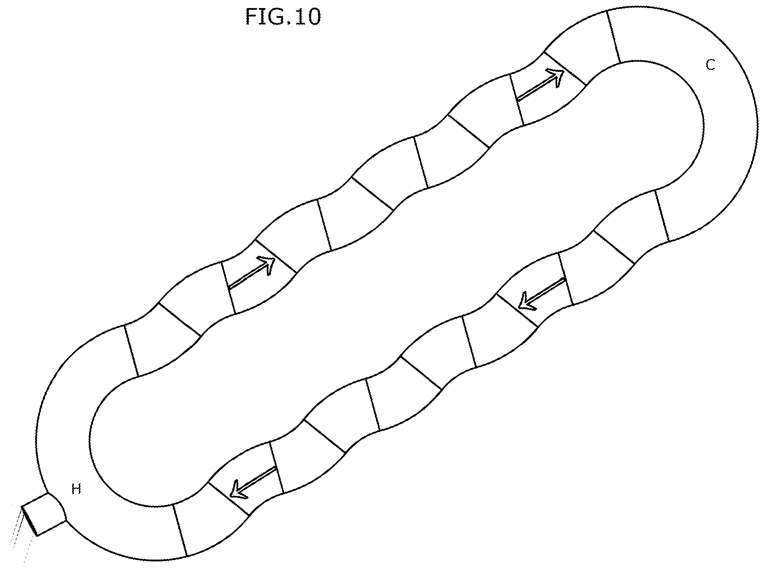

Recent studies conducted by researchers demonstrate that generating a flow circulation in these PHPs' improves the cooling efficiency. Fig. 10 shows an example of a single loop Pulsating Heat Diodic Pipe (PHDP) in which two sinuous diodic pipes in series (Fig. 4) are inserted for this purpose, placed between the evaporator and condenser section.

## Claims

1. A Diodic pipe represented as a circular, or semicircular cross-section rigid valvular conduit, with no moving nor flexible parts with a non linear longitudinal planar or spatial profile, generated by a selected and combined sequence in series of a number of matching base modular elements, each shape of which differing from the other, able of being sinuous (1A-2A), curved (1B-2B), or helical (1C-2C) and each base modular element associated to a selected internal asymmetric flow geometry design, the latter determined by a different form and arrangement of extruded non linear solids consisting of one or more airfoil shaped fins (a of 1A) and one or more extruded non linear socket structures (b of 1A), created to obtain a required pressure and thermal Diodicity value.

2. A Diodic pipe according to claim 1 generated by a combined sequence in series of base modular elements each containing an internal flow geometry design (1A) in which :
• the airfoil shaped fins (a) guide the flow along a defined path when motion occurs in the forward driving direction and divide it when motion occurs in the reverse direction guiding part of this flow into the sockets;
• the sockets, each made up by a non linear solid structure (b) protruding inwards from part of the circular wall of the pipe (b1), with one ellipsoidal surface boundary (b2) forming the aforesaid socket for flow inversion during reverse motion and one convergent non linear extruded surface boundary (b3) to guide the fluid along a smoother path at a higher speed during forward driving motion.

3. A Diodic pipe according to claims 1 and 2 in which the base modular elements (1A-2A-1B-2B-1C-2C) are necessarily equipped with an internal flow geometry design chosen in consonance with the diameter size of the pipe and the physical properties of the working fluid, of three types:
• A two fin (1A-1B-1C) flow geometry design suited for a sinuous (1A), curved (1B) and helical (1C) base modular element;
• A three fin (2B-2C) flow geometry design suited for a curved (2B) and helical (2C) base modular element;
• A four fin (2A) flow geometry design suited for a sinuous base modular element (2A).

4. A Diodic pipe according to claims 1, 2 and 3 with a form (7) generated by a combined sequence in series of base modular sinuous elements with the internal four fin flow geometry design (3A) or a form (8) generated by curved base modular elements with the internal three fin flow geometry design (3B), on each of which base modular element is applied a slight torsion (a) on the non linear extruded socket structure and airfoil shaped fin generating a spiral fluid motion along the forward driving direction to increase pressure and thermal Diodicity.

5. Any hydraulic circuit, pipe-line system, mechanic machinery for the production, distribution, transmission of hydraulic, mechanic and thermal energy with any type of working fluid in which the Diodic pipes of equivalent or dissimilar form according to claims 1, 2, 3 and 4 are used and arranged in parallel, in series or in any other combination scheme.

6. Any high pressure fluid pipe-line system where decompression is needed in which the Diodic pipes of equivalent or dissimilar form according to claims 1, 2, 3 and 4 are used and arranged in parallel, in series or in any other combination scheme.

7. Any number of Diodic pipes according to claims 1, 2, 3 and 4 arranged in parallel, in series, or in any other combination scheme and used as heat exchangers in combined heat and refrigeration systems or for other heat transfer applications.

8. A Regenerator device (9) consisting of a number of Diodic pipes according to claims 1, 2, 3 and 4 arranged in parallel, each pipe divided in two parts separated by an empty center zone, parts that diverge in orientation with the forward direction pointing from the center towards the end zones to neutralize asymmetric flow along the whole alignment from one extremity to the other and efficiently store thermal energy to be recovered or subtracted during the alternate motion of the fluid passing from the hot zone to the cold zone and viceversa.

9. A Pulsating heat Diodic pipe device (10) consisting of a Pulsating heat pipe with one or more Diodic pipes according to claims 1, 2, 3 and 4 arranged in series and placed between the evaporator and the condenser section.

## Patentansprüche

1. Diodisches Rohr, dargestellt als starrer ventilartiger Kanal mit kreisförmigem oder halbkreisförmigem Querschnitt,
ohne bewegliche oder flexible Teile mit einem nichtlinearen longitudinalen ebenen oder räumlichen Profil, erzeugt durch eine ausgewählte und kombinierte sequentielle Reihenfolge einer Anzahl zueinander passender modularer Grundelemente, deren jeweilige Form sich von den anderen unterscheidet und die geschwungen (1A-2A), gekrümmt (1B-2B) oder schraubenförmig (1C-2C) sein können, wobei
jedes modulare Grundelement
einer ausgewählten internen asymmetrischen Strömungsgeometrieauslegung zugeordnet ist, wobei letztere durch eine unterschiedliche Form und Anordnung extrudierter nichtlinearer Körper bestimmt wird, die aus einer oder mehreren tragflächenförmigen Rippen (a von 1A) und einer oder mehreren extrudierten nichtlinearen Aufnahmestrukturen (b aus 1A) bestehen, dazu geschaffen, einen erforderlichen Wert der Druck- und thermischen Diodizität zu erhalten.

2. Diodisches Rohr nach Anspruch 1, erzeugt durch eine kombinierte sequentielle Reihenfolge modularer Grundelemente, von denen jedes eine interne Strömungsgeometrieauslegung (1A) enthält, bei der:
• die tragflächenförmigen Rippen (a) die Strömung entlang eines definierten Pfades leiten, wenn die Bewegung in Vorwärtsantriebsrichtung erfolgt, und sie aufteilen, wenn die Bewegung in Rückwärtsrichtung erfolgt, wobei ein Teil dieser Strömung in die Aufnahmen geleitet wird;
• die Aufnahmen jeweils aus einer nichtlinearen Festkörperstruktur (b) bestehen, die von einem Teil der kreisförmigen Wand des Rohrs (b1) nach innen vorsteht, mit einer ellipsoiden Oberflächenbegrenzung (b2), welche die vorgenannte Aufnahme zur Strömungsumkehr während der Rückwärtsbewegung bildet, und einer konvergenten nichtlinearen extrudierten Oberflächenbegrenzung (b3), um das Fluid während der Vorwärtsantriebsbewegung entlang eines glatteren Pfades mit höherer Geschwindigkeit zu leiten.

3. Diodisches Rohr nach den Ansprüchen 1 und 2, bei dem die modularen Grundelemente (1A-2A-1B-2B-1C-2C) notwendigerweise mit einer internen Strömungsgeometrieauslegung ausgestattet sind, die in Übereinstimmung mit der Durchmessergröße des Rohrs und den physikalischen Eigenschaften des Arbeitsfluids gewählt wird, in drei Typen:
• Eine Zweirippen-Strömungsgeometrieauslegung (1A-1B-1C), geeignet für ein geschwungenes (1A), gekrümmtes (1B) und schraubenförmiges (1C) modulares Grundelement;
• Eine Dreirippen-Strömungsgeometrieauslegung (2B-2C), geeignet für ein gekrümmtes (2B) und schraubenförmiges (2C) modulares Grundelement;
• Eine Vierrippen-Strömungsgeometrieauslegung (2A), geeignet für ein geschwungenes modulares Grundelement (2A).

4. Diodisches Rohr nach den Ansprüchen 1, 2 und 3 mit einer Form (7), erzeugt durch eine kombinierte sequentielle Reihenfolge modularer geschwungener Grundelemente mit der internen Vierrippen-Strömungsgeometrieauslegung (3A), oder einer Form (8), erzeugt durch gekrümmte modulare Grundelemente mit der internen Dreirippen-Strömungsgeometrieauslegung (3B), bei der auf jedes modulare Grundelement eine leichte Torsion (a) auf die nichtlineare extrudierte Aufnahmestruktur und die tragflächenförmige Rippe angewendet wird, wodurch eine spiralförmige Fluidbewegung entlang der Vorwärtsantriebsrichtung erzeugt wird, um die Druck- und thermische Diodizität zu erhöhen.

5. Jeder hydraulische Kreislauf, jedes Rohrleitungssystem, jede mechanische Maschine zur Erzeugung, Verteilung, Übertragung von hydraulischer, mechanischer und thermischer Energie mit jeder Art von Arbeitsfluid, bei denen die diodischen Rohre gleicher oder unterschiedlicher Form nach den Ansprüchen 1, 2, 3 und 4 verwendet und parallel, in Reihe oder in jedem anderen Kombinationsschema angeordnet werden.

6. Jedes Hochdruck-Fluidrohrleitungssystem, bei dem eine Dekompression erforderlich ist und bei dem die diodischen Rohre gleicher oder unterschiedlicher Form nach den Ansprüchen 1, 2, 3 und 4 verwendet und parallel, in Reihe oder in jedem anderen Kombinationsschema angeordnet werden.

7. Jede Anzahl von diodischen Rohren nach den Ansprüchen 1, 2, 3 und 4, die parallel, in Reihe oder in jedem anderen Kombinationsschema angeordnet und als Wärmetauscher in kombinierten Wärme- und Kältesystemen oder für andere Wärmeübertragungsanwendungen verwendet werden.

8. Regeneratorvorrichtung (9), bestehend aus einer Anzahl von diodischen Rohren nach den Ansprüchen 1, 2, 3 und 4, die parallel angeordnet sind, wobei jedes Rohr in zwei Teile geteilt ist, die durch eine leere Mittelzone getrennt sind, Teile, die in ihrer Orientierung divergieren, wobei die Vorwärtsrichtung von der Mitte zu den Endzonen zeigt, um eine asymmetrische Strömung entlang der gesamten Ausrichtung von einem Ende zum anderen zu neutralisieren und thermische Energie effizient zu speichern, die während der alternierenden Bewegung des vom heißen zum kalten Bereich und umgekehrt strömenden Fluids zurückgewonnen oder entzogen werden soll.

9. Diodische Rohr-Pulswärmevorrichtung (10), bestehend aus einem pulsierenden Wärmerohr mit einem oder mehreren diodischen Rohren nach den Ansprüchen 1, 2, 3 und 4, die in Reihe angeordnet und zwischen dem Verdampfer- und dem Kondensatorabschnitt platziert sind.

## Revendications

1. Conduite diodique représentée sous la forme d'un conduit valvulaire rigide de section circulaire ou semi-circulaire,
sans pièces mobiles ni éléments flexibles, présentant un profil longitudinal non linéaire, plan ou spatial, généré par une séquence sélectionnée et combinée en série d'un certain nombre d'éléments modulaires de base correspondants, dont chacun possède une forme différente des autres, pouvant être sinueuse (1A-2A), courbe (1B-2B) ou hélicoïdale (1C-2C),
chaque élément modulaire de base étant associé
à une géométrie interne asymétrique d'écoulement sélectionnée, cette dernière étant déterminée par une forme et une disposition spécifiques de solides extrudés non linéaires constitués d'une ou plusieurs ailettes profilées de type aérodynamique (a de 1A) et d'une ou plusieurs structures de cavité extrudées non linéaires (b de 1A), conçues pour obtenir la valeur souhaitée de diodicité en pression et en transfert thermique.

2. Conduite diodique selon la revendication 1, générée par une séquence combinée en série d'éléments modulaires de base, chacun comprenant une géométrie interne d'écoulement (1A), dans laquelle :
• les ailettes profilées de type aérodynamique (a) guident l'écoulement suivant une trajectoire définie lorsque le fluide se déplace dans le sens direct, et le divisent lorsque le mouvement s'effectue dans le sens inverse, en dirigeant une partie de cet écoulement vers les cavités ;
• les cavités, chacune constituée par une structure solide non linéaire (b) faisant saillie vers l'intérieur à partir d'une partie de la paroi circulaire de la conduite (b1), comprennent une surface limite ellipsoïdale (b2) formant la cavité précitée destinée à provoquer l'inversion de l'écoulement lors du mouvement en sens inverse, ainsi qu'une surface limite convergente extrudée non linéaire (b3) destinée à guider le fluide selon une trajectoire plus régulière et à une vitesse plus élevée lors du mouvement en sens direct.

3. Conduite diodique selon les revendications 1 et 2, dans laquelle les éléments modulaires de base (1A-2A-1B-2B-1C-2C) sont nécessairement pourvus d'une géométrie interne d'écoulement choisie en fonction du diamètre de la conduite et des propriétés physiques du fluide de travail, selon trois types :
• une géométrie interne d'écoulement à deux ailettes (1A-1B-1C), adaptée à un élément modulaire de base sinueux (1A), courbe (1B) ou hélicoïdal (1C) ;
• une géométrie interne d'écoulement à trois ailettes (2B-2C), adaptée à un élément modulaire de base courbe (2B) ou hélicoïdal (2C) ;
• une géométrie interne d'écoulement à quatre ailettes (2A), adaptée à un élément modulaire de base sinueux (2A).

4. Conduite diodique selon les revendications 1, 2 et 3, présentant une forme (7) générée par une séquence combinée en série d'éléments modulaires de base sinueux dotés d'une géométrie interne d'écoulement à quatre ailettes (3A), ou une forme (8) générée par des éléments modulaires de base courbes dotés d'une géométrie interne d'écoulement à trois ailettes (3B), chaque élément modulaire de base étant pourvu d'une légère torsion (a) appliquée à la structure de cavité extrudée non linéaire et à l'ailette profilée de type aérodynamique, générant un mouvement hélicoïdal du fluide dans le sens direct de l'écoulement afin d'augmenter la diodicité en pression et en transfert thermique.

5. Tout circuit hydraulique, système de canalisations, machine mécanique destinée à la production, à la distribution ou à la transmission d'énergie hydraulique, mécanique ou thermique, utilisant tout type de fluide de travail, dans lequel des conduites diodiques de forme identique ou différente selon les revendications 1, 2, 3 et 4 sont utilisées et disposées en parallèle, en série ou selon toute autre configuration de combinaison.

6. Tout système de canalisations pour fluides à haute pression nécessitant une détente, dans lequel des conduites diodiques de forme identique ou différente selon les revendications 1, 2, 3 et 4 sont utilisées et disposées en parallèle, en série ou selon toute autre configuration de combinaison.

7. Tout ensemble de conduites diodiques selon les revendications 1, 2, 3 et 4, disposées en parallèle, en série ou selon toute autre configuration de combinaison, et utilisées comme échangeurs de chaleur dans des systèmes combinés de chauffage et de réfrigération ou dans toute autre application de transfert thermique.

8. Dispositif régénérateur (9) constitué d'un ensemble de conduites diodiques selon les revendications 1, 2, 3 et 4, disposées en parallèle, chaque conduite étant divisée en deux parties séparées par une zone centrale vide, les deux parties présentant des orientations divergentes à partir du centre vers les extrémités dans le sens direct de l'écoulement, de manière à neutraliser l'asymétrie de l'écoulement sur l'ensemble du trajet d'une extrémité à l'autre et à stocker efficacement l'énergie thermique afin qu'elle puisse être restituée ou extraite lors du mouvement alterné du fluide entre la zone chaude et la zone froide, et inversement.

9. Dispositif de caloduc pulsatoire diodique (10), constitué d'un caloduc pulsatoire comprenant une ou plusieurs conduites diodiques selon les revendications 1, 2, 3 et 4, disposées en série et placées entre la section évaporateur et la section condenseur.
